# EUROPEAN PATENT SPECIFICATION

(11) **EP 2 061 111 B1**
(45) Date of publication and mention of the grant of the patent: **12.09.2012**
(21) Application number: 08016702.6
(22) Date of filing: 23.09.2008
(51) Int. Cl.: H01M 8/02

(54) **Use of a titanium substrate for forming separator for fuel cell and method of manufacturing the separator**
Verwendung eines Titansubstrates für einen Separator einer Brennstoffzelle und Verfahren zur Herstellung des Separators
Utilisation d'un substrat de titane pour former un séparateur de pile à combustible et procédé de fabrication du séparateur

(30) Priority: 15.11.2007 JP 2007296408
(43) Date of publication of application: 20.05.2009
(73) Proprietor: Kabushiki Kaisha Kobe Seiko Sho (Kobe Steel, Ltd.), Kobe-shi, Hyogo 651-8585 (JP)
(72) Inventor: Suzuki, Jun, Kobe-shi Hyogo 651-2271 (JP); Sato, Toshiki, Kobe-shi Hyogo 651-2271 (JP); Yashiki, Takashi, Osaka-shi Osaka 541-0051 (JP); Ito, Yoshinori, Kobe-shi Hyogo 651-2271 (JP); Tanifuji, Shinichi, Kobe-shi Hyogo 651-2271 (JP)
(74) Representative: Müller-Boré & Partner Patentanwälte

(56) References cited:
- EP-A- 1 264 913
- WO-A-2007/138436
- CA-A1- 2 646 189
- JP-A- 2003 236 604

## Description

The present invention relates to the use of a titanium substrate for forming a separator for a fuel cell and a method of manufacturing the separator.

The fuel cell, differing from the primary battery, such as a dry battery, and the secondary battery, such as a lead-acid storage battery, is capable of continuously generating electric energy when a fuel, such as hydrogen gas, and an oxidizer, such as oxygen, are supplied continuously thereto. The fuel cell generates electric power at a high power generating efficiency without being significantly affected by the scale of an electric power using system and does not generate much noise and vibrations. Therefore, the fuel cell is expected to be used as an energy source covering a wide variety of uses and scales. More concretely, there have been developed a solid polymer fuel cell (PEFC) , an alkali electrolyte fuel cell (AFC), a phosphoric acid fuel cell (PAFC) , a molten fuel cell (MCFC), a solid oxide fuel cell (SOFC) and a biofuel cell.

A solid polymer fuel cell will be described as an example of the fuel cell. A solid polymer fuel cell is formed by sandwiching an electrolytic film of a solid polymer between an anode and a cathode. Plural solid polymer fuel cells of such a type and separators, namely, bipolar plates, are arranged alternately to form a solid polymer fuel cell.

Most activities for the development of solid polymer fuel cells are intended to develop fuel cells for fuel cell automobiles, domestic cogeneration systems, mobile telephones and personal computers. The number of stacked fuel cells needs to be increased to provide a fuel cell having a high output capacity. At the same time, solid polymer fuel cells are required to have a small thickness. Therefore, it is desired that separators of pure titanium, for example, have a thickness of 0.3 mm or below.

Separators for a solid polymer fuel cell are required to reduce contact resistance, namely, voltage drop in the interface of an electrode and a separator, and to maintain a low contact resistance for a long period of use. From the viewpoint of workability and strength, studies have been made to apply metallic materials, such as aluminum alloys, stainless steels, nickel alloys and titanium alloys, to separators.

A separator for fuel cells mentioned in JP 10-228914 is formed by gold-plating the surface of a substrate of a stainless steel.
A separator for fuel cells mentioned in JP-A-2001-6713 is formed by attaching a noble metal or a noble metal alloy to the surface of a substrate of a stainless steel or titanium or by attaching a noble metal or a noble metal alloy to the surface of a substrate of a stainless steel or titanium after removing an oxide film formed on the surface of the substrate.
A separator for fuel cells mentioned in JP-A-2006-97088 is formed by removing an oxide film formed on the surface of a substrate of titanium and forming gold lands of 1 to 100 nm in thickness on the surface of the substrate by plating.

When substrates of metals, such as aluminum alloys, stainless steels, nickel alloys and titanium alloys, are applied to separators of fuel cells, the conductivity of the substrate tends to reduce significantly due to the agency of oxide films and such formed on the surface of the substrates because the separators are used in a severe environment of strong acid, high temperature and high pressure. Consequently, separators formed by using those metal substrates cannot maintain the low initial contact resistance for a long time, the contact resistance thereof increases with time and the separators cause current loss. Metal ions eluted from the substrates by corrosion deteriorate the electrolytic film of the solid polymer.

The substrates mentioned in JP-A-10-228914, JP-A-2001-6713 and JP-A-2006-97088 can keep the contact resistance at a low level at the initial stage of use. However, it is possible that plated films, such as gold films, fall off the substrates and, consequently, contact resistance increases and the performance of the fuel cell is deteriorated when the substrates are exposed to a severe acid atmosphere in the fuel cell. It is possible that the substrate is corroded and the electrolytic film of the sold polymer is degraded by metal ions eluted from the substrate when the plated gold films fall off the substrate.

The inventors of the present invention found, during studies of substrates for forming thin separators, that a separator formed by coating the surface of a substrate of pure titanium or a titanium alloy with a noble metal film, and subjecting the substrate coated with the noble metal film to a heat treatment at a temperature in the range of 300°C to 800°C can maintain a low contact resistance for a long time when used in a fuel cell. It was found also that separators of different manufacturing lots have different effects, respectively, on maintaining a low contact resistance for a long time.

The present invention has been made in view of the foregoing problems and it is therefore an object of the present invention to use a titanium substrate, for forming a separator for a fuel cell, capable of maintaining a low contact resistance for a long time in the fuel cell and of exercising the same effect on maintaining a low contact resistance for a long time regardless of the manufacturing lot thereof.

Usually, the surface of a substrate of pure titanium or a titanium alloy in contact with the atmosphere is oxidized inevitably and an oxide film containing oxidized titanium as a principal component, namely, a natural oxide film, is formed in surface layers of the substrate. Such an oxide film has acid resistance. The substrate can have an excellent conductivity, which will be described later, when the surface of the substrate is coated with a noble metal film and the substrate coated with the noble metal film is subjected to a heat treatment at a temperature in the range of 300°C to 800°C. The manufacture of a substrate of pure titanium or a titanium alloy for a separator for a fuel cell includes a cold-rolling process using a lubricating oil for forming a sheet having a thickness of, for example, about 0.3 mm. Carbon contained in the lubricant bonds mechanochemically to titanium in the surface of the substrate to form much titanium carbide. Since titanium carbide is inferior to oxidized titanium in acid resistance, the function of the oxide film, namely, the natural oxide film, is lost when much titanium carbide is formed in the surface.

It is difficult to form oxidized titanium crystal grains, which will be described later, by coating the surface of a substrate having much titanium carbide with a noble metal film and subjecting the substrate coated with the noble metal film to, for example, a heat treatment at a temperature in the range of 300°C to 800°C and hence the acid resistance of the substrate cannot be improved. When a substrate containing much titanium carbide and coated with a noble metal film is subj ected to the heat treatment, agglomeration of grains is liable to occur in the noble metal film and, consequently, the noble metal film assumes a dotted pattern.
When a separator formed from such a substrate is exposed to a high-temperature acid atmosphere, the corrosion and oxidation (hereinafter, referred to as "corrosion and such") of titanium carbide progresses in proportion to exposure time because titanium carbide is inferior to oxidized titanium in acid resistance. It was found that the interface in which the noble metal grains are agglomerated is corroded eventually and conductivity reduces when titanium carbide is corroded. In short, it was found that the surface layer containing a relatively large amount of titanium carbide cannot maintain a low contact resistance for a long time.

The inventors of the present invention made studies of substrates for forming separators for fuel cells to solve the foregoing problems and found that a separator for a fuel cell formed by processing a substrate provided with a conductive layer formed by a heat treatment can maintain a low contact resistance for a long time when the maximum carbon content of the surface layers of the substrate is reduced to a value not higher than a specified value before forming the conductive layer, and that separators thus formed have the same effect on maintaining a low contact resistance for a long time regardless of manufacturing lot. The present invention has been made on the bases of those findings.

In a first aspect of the present invention, a titanium substrate, for forming a separator for a fuel cell, is made of pure titanium or a titanium alloy and has surface layers containing carbon having binding energy in the range of 280 to 284 eV as measured by x-ray photoelectron spectroscopy in a maximum carbon content of 25% at. or below.

The titanium substrate for forming a separator for a fuel cell has the surface layer having the maximum carbon content of a value not higher than the specified value. Therefore, the amount of titanium carbide, inferior to oxidized titanium in acid resistance, contained in the surface layer is relatively small and hence a relatively large amount of oxidized titanium excellent in acid resistance and conductivity can be formed by subjecting the substrate to a heat treatment at a temperature in the range of, for example, 300°C to 800°C. Therefore, it is possible to manufacture separators for a fuel cell having similar capabilities of maintaining a low contact resistance for a long time regardless of manufacturing lot by using the substrates of the present invention.

In the titanium substrate according to the first aspect, it is preferable that the titanium substrate is made of pure titanium and has a thickness in the range of 0.05 to 0.3 mm.

The titanium substrate of pure titanium can be comparatively easily form in the predetermined thickness and is satisfactory in strength and facility of handling.

A second aspect of the present invention is directed to a method of manufacturing a separator for a fuel cell, wherein the method includes the steps of: forming a noble metal film containing at least one of Ru, Rh, Pd, Os, Ir, Pt and Au on the surface of the titanium substrate according to the first aspect; and subjecting the titanium substrate coated with the noble film to a heat treatment at a temperature between 300 °C and 800 °C.

The separator manufactured by processing the titanium substrate of the present invention for forming a separator for a fuel cell and having the noble metal film is satisfactory in acid resistance and conductivity.

In the titanium substrate according to the present invention for forming a separator for a fuel cell, the maximum carbon content of the surface layer of the substrate is limited to the specified value to form a comparatively large amount of oxidized titanium in the surface layer. Therefore, the separator manufactured by subjecting the substrate coated with the noble metal film to a heat treatment at a temperature in the range of 300°C to 800°C can maintain a low contact resistance for a long time. For example, separators manufactured by processing the substrates of different manufacturing lots have similar capabilities of maintaining a low contact resistance for a long time.
The above and other objects, features and advantages of the present invention will become more apparent from the following description taken in connection with the accompanying drawings, in which:
Fig. 1 is a fragmentary cross-sectional view of a titanium substrate for forming a separator for a fuel cell;
Fig. 2 is a graph showing the respective distributions of Ti content (curve Ti2p), C content (curve C1s), O content (curve O1s), and N content (curve N1s) with respect to depth in a surface layer of a titanium substrate in a preferred embodiment according to the present invention for forming a separator for a fuel cell measured by x-ray photoelectron spectroscopy, in which depth (nm) is measured on the horizontal axis and content (% at.) is measured on the vertical axis;
Fig. 3 is a view of assistance in explaining a contact resistance measuring method;
Fig. 4 is a graph showing the relation between contact resistance and maximum C content in a surface layer for specimens;
Fig. 5 is a montage spectrum of C content distribution curves (C1s) in a surface layer of a conventional titanium substrate for forming a separator for a fuel cell measured by x-ray photoelectron spectroscopy, in which binding energy (eV) is measured on the horizontal axis, intensity is measured on a first vertical axis and depth (nm) is measured on a second vertical axis; and
Fig. 6 is a graph showing the respective distributions of Ti content (curve Ti2p), C content (curve C1s), O content (curve O1s) and N content (curve N1s) with respect to depth in a surface layer of a conventional titanium substrate for forming a separator for a fuel cell measured by x-ray photoelectron spectroscopy, in which depth (nm) is measured on the horizontal axis and content (% at.) is measured on the vertical axis.

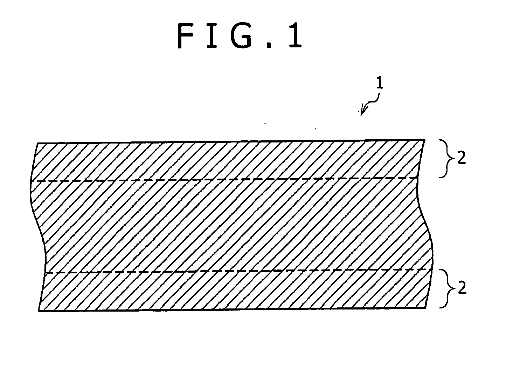

A titanium substrate in a preferred embodiment according to the present invention for forming a separator for a fuel cell will be described with reference to Fig. 1.

Referring to Fig. 1, a titanium substrate 1 in a preferred embodiment according to the present invention for forming a separator for a fuel cell is made of pure titanium or a titanium alloy. The titanium substrate 1 has surface layers 2 containing carbon having binding energy in the range of 280 to 284 eV as measured by x-ray photoelectron spectroscopy in a maximum C content in the range of 25% at. or below.

Conditions for x-ray photoelectron spectroscopy were x-ray source: monochromatic Al-Kα, output x-ray power: 43.7 W, diameter of x-ray beam: 200 µm, electron emission angle: 45°, and Ar⁺ sputtering rate: approximately 4.6 nm/min in reduced SiO₂ sputtering rate. The C content (% at.) can be determined on the basis of measured Ti, O, C and N contents of surface layers of a thickness of 100 nm or 200 nm. Usually, a possible depth of measurement by x-ray photoelectron spectroscopy is only several nanometers. Therefore, it is recommended to analyze surface layers having a thickness of 100 nm or 200 nm by x-ray photoelectron spectroscope while the surface of the surface layer is removed gradually by Ar⁺ sputtering.

In the present invention, surface layers 2 of the titanium substrate 1 is a part in a depth range of 0 to about 100 nm, preferably, the depth range of 0 to 200 nm, of the titanium substrate 1. The C content of the surface layer 2 has significant effects on the condition of oxidized titanium, the degree of agglomeration of atoms in a noble metal layer, not shown, that may be formed by a heat treatment to which the titanium substrate 1 is subjected to form a separator for a fuel cell, the capability of a separator formed by processing the titanium substrate in maintaining a low contact resistance for a long time, and the magnitude of difference in the effect on maintaining a low contact resistance for a long time among titanium substrates of different manufacturing lots. Titanium in the surface layer 2 exposed to the atmosphere is oxidized inevitably to form an oxide film containing oxidized titanium as a principal component, namely, a natural oxide film.

Suppose that the surface layers 2 of the titanium substrate 1 have a high C content. When such a titanium substrate is subjected to the heat treatment to form a separator for a fuel cell, atoms of the noble metal layer are liable to agglomerate and hence the separator cannot maintain a low contact resistance for a long time.

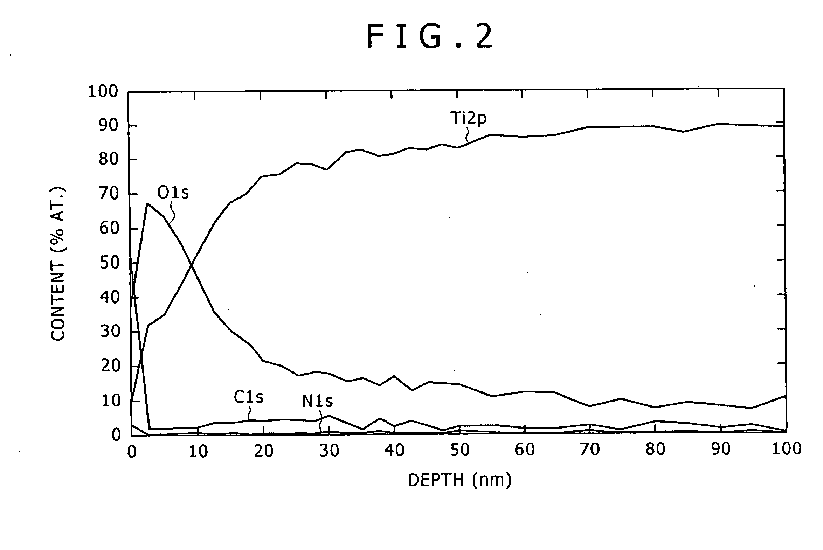

The surface layers 2 of the titanium substrate 1 of the present invention contain carbon having binding energy in the range of 280 to 284 eV as measured by x-ray photoelectron spectroscopy in a maximum C content in the range of 25% at. or below as shown in Figs. 2, 5 and 6.

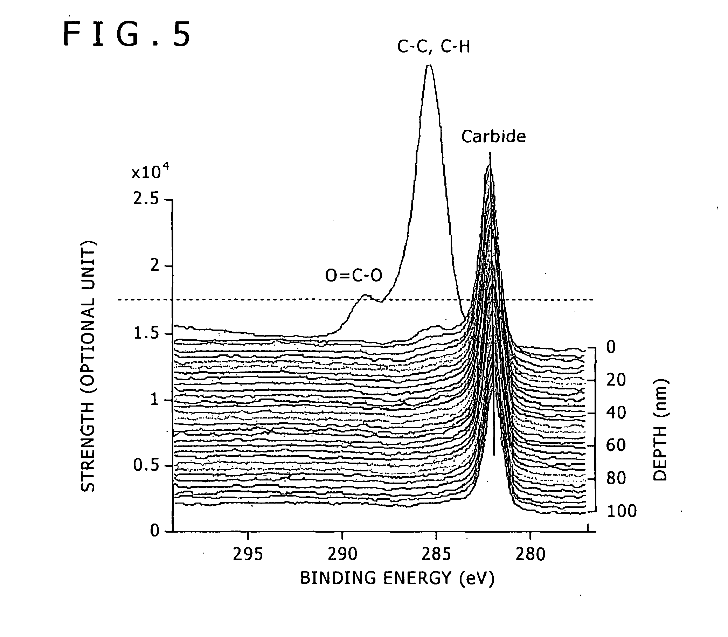

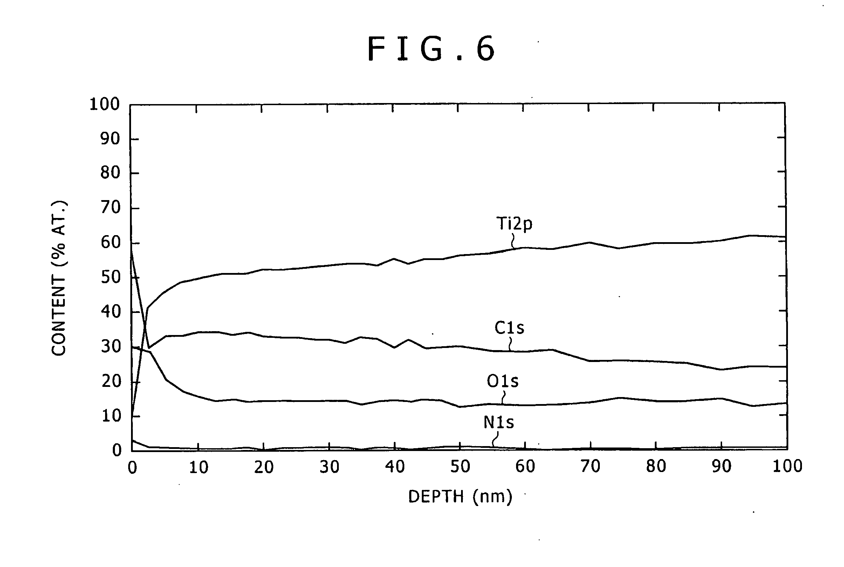

Fig. 2 is a graph showing data obtained by analyzing the surface layer 2 of the titanium substrate 1 by x-ray photoelectron spectroscopy. In Fig. 2, curves Ti2p, C1s, O1s and N1s indicate the respective distributions of Ti content, C content, O content, and N content with respect to depth in the surface layer 2 of the titanium substrate 1 for forming a separator for a fuel cell measured by x-ray photoelectron spectroscopy. In Fig. 2, depth (nm) is measured on the horizontal axis and content (% at.) is measured on the vertical axis. Fig. 5 is a graph showing data obtained by analyzing surface layers of a conventional titanium substrate for forming a separator for a fuel cell by x-ray photoelectron spectroscopy and is a montage spectrum of C content distribution curves C1s in a surface layer of a conventional titanium substrate for forming a separator for a fuel cell measured by x-ray photoelectron spectroscopy, in which binding energy (eV) is measured on the horizontal axis, intensity is measured on a first vertical axis and depth (nm) is measured on a second vertical axis. Fig. 6 is a graph showing data obtained by analyzing a surface layer of a conventional titanium substrate for forming a separator for a fuel cell by x-ray photoelectron spectroscopy. In Fig. 6, the respective distributions of Ti content, C content, O content and N content are indicated by curves Ti2p, C1s, O1s, and N1s, respectively, depth (nm) is measured on the horizontal axis, and content (% at.) is measured on the vertical axis. The conventional titanium substrate having properties represented by Figs. 5 and 6 was analyzed by x-ray photoelectron spectroscopy. Conditions for x-ray photoelectron spectroscopy were x-ray source: monochromatic Al-Kα, output x-ray power: 43.7 W, diameter of x-ray beam: 200 µm, photoelectron emission angle: 45°, and Ar⁺ sputtering rate expressed in SiO₂ sputtering rate: 4.6 nm/min. The surface layer of the conventional titanium substrate contained carbon having binding energy in the range of 280 to 284 eV in a maximum C content of about 33% at.

As mentioned above, Fig. 5 is a montage spectrum showing the data obtained through the analysis of the surface layer of the conventional titanium substrate for forming a separator for a fuel cell by x-ray photoelectron spectroscopy. As shown in Fig 5, first type carbon in a part in a depth range of 0 to 100 nm of the surface layer has binding energy in the range of 280 to 284 eV, and second type carbon in the surface of the surface layer has binding energy in the range of 284 to 290 eV.

The carbon having binding energy in the range of 280 to 284 eV is carbon mechanochemically bonded to the base material of the titanium substrate, namely, carbon originating from titanium carbide. The carbon having binding energy in the range of 284 to 290 eV is carbon originating from the lubricating oil and such, namely, carbon originating from C-C bonds and O=C-O bonds. The measured strength and the C content relating to the carbon having binding energy in the range of 284 to 290 eV are dependent on the amount of the lubricating oil adhering to the titanium substrate, and measurable range in the direction of depth is dependent on the surface roughness of the titanium substrate. Therefore, the quantitative measurement of the carbon is difficult.

The carbon having binding energy in the range of 280 to 284 eV is, as mentioned above, carbon mechanochemically bonded to the base material of the substrate during a cold rolling process. Therefore, the measured strength and content do not change with the amount of the lubricating oil adhering to the titanium substrate and hence the quantitative measurement of this carbon is possible. The amount of the carbon having binding energy in the range of 280 to 284 eV and contained in the surface layer increases when the amount of the lubricating oil adhering to the titanium substrate increases. The amount of the carbon having binding energy in the range of 280 to 284 eV and contained in the surface layer decreases when the amount of the lubricating oil adhering to the titanium substrate decreases. In this specification, "C content" is the amount of carbon having binding energy in the range of 280 to 284 eV per unit weight of the surface layer. Fig. 2 shows the distribution of the measured C content in a surface layer in the depth range of 0 to 100 nm. It is expected that carbon in a depth range exceeding 100 nm, for example, a range of above 100 to 200 nm, has the same binding energy. Similarly, Fig. 6 shows the distribution of the measured C content in a surface layer in the depth range of 0 to 100 nm. It is expected that the C content of a part in a depth range of 0 to 100 nm or above, that is, a part in a depth range of above 100 to 200 nm is equal to or lower than the C content of a part in a depth range of 0 to 100 nm. Therefore, it is desirable that the surface layer in the depth range of 0 to 100 nm, preferably, in the depth range of 0 to 200 nm, contains carbon having binding energy in the range of 280 to 284 eV in a maximum C content of 25% at. or below.

Carbon having binding energy in the range of 284 to 290 eV as shown in Fig. 5 originates in lubricating oil and such. It is known from Figs. 2 and 6 that the surface of the titanium substrate 1 contains this carbon at the highest carbon content. Thus, it is known that the carbon originating in lubricating oil and such adheres only to the surface of the titanium substrate 1 and scarcely has influence on deep parts of the titanium substrate 1.

The present invention requires the surface layers 2 of the titanium substrate 1 to contain carbon having binding energy in the range of 280 to 284 eV in a maximum C content of 25% at. or below measured by x-ray photoelectron spectroscopy so that the surface layers 2 may contain a relatively large amount of oxidized titanium, and the agglomeration of atoms of the noble metal layer containing at least one of Ru, Rh, Pd, Os, Ir, Pt and Au that will occur when the titanium substrate 1 coated with the noble metal film is subjected to a heat treatment at a temperature in the range of 300°C to 800°C to form a separator may be suppressed. Therefore, a separator formed by processing the titanium substrate 1 coated with the noble metal layer can maintain a low contact resistance for a long time. Moreover, the magnitude of difference in the effect on maintaining a low contact resistance for a long time among separators formed by processing titanium substrates 1 of different manufacturing lots can be reduced.

When the surface layers 2 of the titanium substrate 1 contain carbon having binding energy in the range of 280 to 284 eV in a maximum C content above 25% at., the surface layers 2 contain titanium carbide in a relatively high titanium carbide content and atoms of the noble metal layer agglomerate when the titanium substrate 1 is subjected to the heat treatment. Therefore, a separator, for a fuel cell, formed by processing such a substrate cannot maintain a low contact resistance for a long time, and it is possible that the magnitude of difference in the effect on maintaining a low contact resistance for a long time among separators formed by processing the titanium substrates of different manufacturing lots is large.
Preferably, the surface layers 2 of the titanium substrate 1 contain carbon having binding energy in the range of 280 to 284 eV in a maximum C content of 22% at. or below, desirably, 20% at., more desirably, 17% at. or below measured by x-ray photoelectron spectroscopy.
A method of limiting the maximum C content to a value of 25% at. or below will be described later.

The material of the titanium substrate 1 is pure titanium or a titanium alloy, such as titanium of any one of Classes 1 to 4, H4600, JIS, or any one of Ti-Al, Ti-Ta, Ti6Al-4V and Ti-Pd alloys. Pure titanium containing metals other than the foregoing metals and having a composition corresponding to the foregoing pure titanium, and titanium alloys containing metals other than the foregoing metals are also suitable materials for forming the titanium substrate of the present invention.

Preferably, the titanium substrate 1 of the present invention is made of pure titanium and has a thickness in the range of 0.05 to 0.3 mm. The titanium substrate 1 of pure titanium can be comparatively easily formed in a thickness in the range of 0.05 to 0.3 mm and is satisfactory in strength and facility of handling. Thus, the substrate 1 of the present invention can meet a need for increasing the number of stacks and a need for reducing the thickness of a fuel cell.
It is technically difficult to form the titanium substrate 1 in a thickness below 0.05 mm. A titanium substrate having a thickness above 0. 3 mm cannot meet the foregoing needs.
However, the thickness of the titanium substrate 1 of the present invention is not necessarily limited to those in the range of 0.005 and 0.3 mm. The titanium substrate 1 may be made of a titanium alloy and may have a thickness above 0.3 mm. A substrate having a thickness above 0. 3 mm can be used for forming a separator for a fuel cell for domestic and industrial cogeneration systems in which the reduction of the thickness of the fuel cell is not very important as compared with fuel cells for electric vehicles powered by a fuel cell, a mobile telephones and personal computers. It goes without saying that the thickness of the titanium substrate 1 may be below 0.05 mm as the occasion demands.

Preferably, a separator is formed by coating the surfaces of the titanium substrate 1 of the present invention with a noble metal film containing at least one of Ru, Rh, Pd, Os, Ir, Pt and Au, and subjecting the titanium substrate 1 coated with the noble metal film to a heat treatment at a temperature in the range of 300°C to 800°C. Although noble metals including Ru, Rh, Pd, Os, Ir, Pt and Au do not form a passive film, it is known that noble metals are excelling in acid resistance, noble metals are excellent in conductivity because noble metals are transition metals, and noble metals have similar properties. Therefore, a separator having satisfactory acid resistance and conductivity can be manufactured by processing the titanium substrate 1 coated with a film containing a noble metal or noble metals properly chosen from those noble metals.

Preferably, the film forming process for forming a noble metal film containing a noble metal on the surface of the titanium substrate 1 is a PVD process, such as a sputtering process, a vacuum evaporation process or an ion-plating process. Above all, a sputtering process is most preferable because a sputtering process facilitates controlling the thickness of a noble metal film, not shown. Since a PVD process can coat the surfaces of the titanium substrate 1 at an ordinary temperature, a PVD process scarcely causes damage, such as warping or strength reduction, to the titanium substrate 1, can form a noble metal film on a surface having a comparatively large area, and hence can improve productivity.

The heat treatment at a temperature in the range of 300°C to 800°C can enhance the adhesion of the noble metal film to the surfaces of the titanium substrate 1, can crystallize an oxide film to reduce contact resistance, can satisfactorily diffuse the noble metal or noble metals contained in the noble metal film into the titanium substrate, and titanium of the titanium substrate 1 into the noble metal film, and can oxidize titanium exposed in pinholes to ensure the acid resistance of a separator for a fuel cell.
The heat treatment at a temperature below 300°C is not practical because the heat treatment takes a long time to crystallize the oxide film and, in some cases, cannot satisfactorily diffuse the noble metal or noble metals contained in the noble metal film into the titanium substrate 1, and titanium of the titanium substrate 1 into the noble metal film.
The heat treatment at a temperature above 800°C causes excessively rapid diffusion of the noble metal or noble metals contained in the noble metal film into the titanium substrate 1, and titanium of the titanium substrate 1 into the noble metal film. Consequently, titanium diffused into the outer surface of the noble mental film is oxidized by oxygen contained in the atmosphere of the heat treatment to form an oxide film not satisfactorily deficient in oxygen, namely, an oxide film not deficient in oxygen. Although such an oxide film has high acid resistance, the oxide film undesirably increases contact resistance.
Preferably, the temperature for the heat treatment is in the range of 350°C to 750°C, desirably, 380°C to 730°C. In some cases, titanium diffuses into the surface and forms an oxide film even if the temperature for the heat treatment is in that preferable temperature range, when the heat treatment is continued for a long time. Therefore, it is preferable to adjust the duration of the heat treatment properly taking the time for the heat treatment into consideration.

The surface layers 2 of the titanium substrate 1 of the present invention contain carbon having binding energy in the range of 280 to 284 eV in a maximum C content of 25% at. or below as measured by x-ray photoelectron spectroscopy. Therefore, the surface layers 2 contain titanium carbide in a relatively low content and oxidized titanium in a relatively high content. Since the noble metal film does not agglomerate easily when the titanium substrate 1 coated with the noble metal film is subjected to a heat treatment at a temperature in the range of about 300°C to about 800°C, the titanium substrate 1 is excellent in acid resistance and conductivity and can maintain a low contact resistance for a long time.

A method of manufacturing the titanium substrate 1 of the present invention will be described.
The titanium substrate 1 of the present invention is formed by subjecting an ingot of pure titanium or the titanium alloy to a slabbing process to form a slab, subjecting the slab to an ordinary hot rolling process to form a plate of, for example, 3.5 mm in thickness, subjecting the plate to an annealing process and an acid pickling process for descaling, the descaled plate is subjected to a cold rolling process to form a sheet of, for example, 0.4 mm in thickness, subjecting the sheet to an atmospheric annealing process at 600°C for several minutes, subjecting the annealed sheet to a salt immersion process and an acid pickling process, subjecting the cleaned sheet to a reverse cold rolling process to form a sheet of a desire thickness of, for example, 0.1 mm, and subjecting the sheet having the desired thickness to a degreasing and cleaning process. Preferably, the rolling reduction of each pass of the reverse cold rolling process is in the range of 5% to 10%.
When the rolling reduction of each pass of the reverse cold rolling is high or the rolling rolls have many flaws in their surfaces, the surface layers 2 of the titanium substrate 1 are liable to contain carbon having binding energy in the range of 280 to 284 eV in a maximum C content above 25% at.

If the surface layers 2 of the titanium substrate 1 contain carbon having binding energy in the range of 280 to 284 eV in a C content above 25% at. as measured by x-ray photoelectron spectroscopy, the maximum C content of the surface layers 2 of the titanium substrate 1 can be reduced to 25% at. or below by removing parts of the surface layers 2 of the titanium substrate 1 by a mechanical or chemical surface removing method.

A polishing method using emery paper or diamond paste and a sand blasting method using alumina particles or glass particles are possible mechanical surface removing methods A dissolving method that immerses the titanium substrate 1 in a mixed solution prepared by mixing, for example, hydrofluoric acid and nitric acid to dissolve titanium carbide and titanium in the surfaces of the titanium substrate 1 in the mixed solution is a possible chemical surface removing method.

It is desirable to remove a surface part of a thickness of 2 µm or above of each of the surface layers 2 by the mechanical or chemical surface removing method because, in some cases, carbon penetrates comparatively deep into the surface layers 2. Even if the C content of a part in a depth range of 0 to 200 nm of the surface layer 2 of the titanium substrate 1 is, for example, 30% at. or above, a part in a depth range of 0 to 200 nm of the surface of the titanium substrate 1 having a C content in the range of 3 to 5% at. or below the lower limit of such a C content range can be formed by removing such a part of the surface layer 2 by such a mechanical or chemical surface removing method. Although there is no limit to the thickness of the part to be removed of the surface of the titanium substrate 1, it is preferable that the upper limit of the thickness of a part to be removed of each surface layer 2 is on the order of 20 µm because the removal of an excessively thick part of the surface layer 2 affects adversely to the yield of titanium substrate 1.

The titanium substrate 1 of the present invention can be surely manufactured by the above-mentioned processes.

A method of using the titanium substrate 1 of the present invention will be described by way of example.
The surfaces of the titanium substrate 1 is coated with a noble metal film containing at least one of Ru, Rh, Pd, Os, Ir, Pt and Au by, for example, a PVD process. The titanium substrate 1 coated with the noble metal film is subjected to a heat treatment at a temperature in the range of 300°C to 800°C. Thus, oxidized titanium formed in the surfaces of the titanium substrate 1 can be converted into high-temperature oxidized titanium, which will be described later, and the noble metal or noble metals contained in the noble metal film can be diffused into the titanium substrate 1. The titanium substrate 1 thus formed can be used for forming a separator having high conductivity for a fuel cell.

The oxidized titanium formed in the surfaces of the titanium substrate 1 can be converted into high-temperature oxidized titanium and high-temperature oxidized titanium can be formed in the interface, not shown, between the titanium substrate 1 and the noble metal film by the heat treatment.

The high-temperature oxidized titanium is formed through the heat treatment of pure titanium in the surface of the titanium substrate 1 or an oxide film of the titanium alloy at a high temperature. The oxide film formed in the surface of the titanium substrate 1 before the heat treatment is partly or entirely crystallized by the heat treatment. Since the supply of oxygen to the oxide film underlying the noble metal film is blocked by the noble metal film during crystallization, oxygen diffuses into the titanium substrate 1, the oxygen content decreases, and the oxidized titanium changes into a oxidized titanium deficient in oxygen, namely, oxidized titanium of oxygen-deficient inclined structure. The crystallized oxidized titanium is an n-type semiconductor having conductivity that increases when the amount of oxygen contained therein decreases below the stoichiometric amount of oxygen. That is, the conductivity of the oxide film formed in the surface of the titanium substrate 1 can be improved by the heat treatment. Oxidized titanium of such crystal structure is a rutile type oxidized titanium crystal or a brookite type oxidized titanium crystal. The term "rutile type crystal" signifies a crystal of the same crystal structure as a rutile crystal, and the term "brookite type crystal" signifies a crystal of the same crystal structure as a brookite crystal. The high-temperature oxidized titanium having oxygen-deficient rutile and brookite crystals can be more easily produced by heat treatment using an atmosphere having a lower partial oxygen pressure. The high-temperature oxidized titanium having oxygen-deficient rutile and brookite crystals can be still more easily produced by heat treatment using an atmosphere containing still less oxygen, such as the heat treatment of parts coated with a noble metal film.

The heat treatment can give a high acid resistance to the surface of the titanium substrate 1, can enhance the adhesion of the noble metal film to the titanium substrate 1, and can improve the conductivity of the noble metal film and the titanium substrate 1 by crystallizing the oxide film between the noble metal film and the titanium substrate 1, i.e., by converting the oxide layer between the noble metal film and the titanium substrate 1 into a high-temperature oxidized titanium layer.

Preferably, the heat treatment is carried out at 0.01 Pa or below. When the heat treatment is carried out at such a pressure, the oxidation of a noble metal film of a noble metal that can be oxidized by heat treatment at a high temperature, such as a Pd film, can be suppressed and the oxidized titanium in the surface of the titanium substrate 1 can be converted into high-temperature oxidized titanium. The titanium substrate thus processed is excellent in acid resistance and conductivity and can maintain a low contact resistance for a long time.

### Examples

Examples tested for proving the effect of the present invention will be described.

### Test 1

Titanium sheets (thickness: 0.15 mm) of pure titanium specified in H 4600, JIS processed under processing conditions shown in Table 1 to obtain eight sample titanium sheets. Specimens of 20 mm in width and 50 mm in length were cut out from the eight sample titanium sheets, respectively. The specimens were cleaned in acetone by ultrasonic cleaning.
The respective maximum C contents (% at.) of surface layers of the specimens were measured by the following method.

**Table 1**

| No | Rolling mill | Rolling mill oil | Thickness of work-piece (mm) | thickness of rolled sheet (mm) | Total rolling reduction (%) | Rolling reduction per pass (%) | Removal of titanium carbide | maximum C content of surface layer(% at.) | |
|---|---|---|---|---|---|---|---|---|---|
| 1 | 4-Stand rolling mill | Ester | 0.4 | 0.15 | 62.5 | 10 | - | 10 | Example |
| 2 | 4-Stand rolling mill | Ester | 0.6 | 0.15 | 75 | 10 | - | 12 | Example |
| 3 | 4-Stand rolling mill | Ester | 1.0 | 0.12 | 88 | 10 | - | 17 | Example |
| 4 | 12-Stand rolling mill | Mineral | 0.6 | 0.09 | 85 | 15 | - | 28 | Comparative example |
| 5 | 12-Stand rolling mill | Mineral | 1.0 | 0.12 | 88 | 15 | - | 33 | Comparative example |
| 6 | 12-Stand rolling mill | Mineral | 1.0 | 0.2 | 80 | 10 | - | 20 | Example |
| 7 | 12-Stand rolling mill | Mineral | 1.0 | 0.15 | 85 | 10 | - | 23 | Example |
| 8 | 12-Stand rolling mill | Mineral | 1.0 | 0.12 | 88 | 15 | acid pickling (No.5) | 3 | Example |

An automatic scanning type x-ray photoelectron spectrometer (Quantera SMX, Physical Electronics) was used for the x-ray photoelectron spectroscopic analysis of the specimens to determine the respective C contents of the surface layers of the specimens. Conditions for the x-ray photoelectron spectroscopic analysis are shown below. The composition including Ti, O, C and N of a part in a depth range of 0 to 100 nm of the surface layer of each specimen were analyzed. A maximum measured C content was chosen as the C content (% at.) of the surface layer of the specimen.
Conditions for X-ray Photoelectron Spectroscopic Analysis
X-ray source: Monochromatic Al-Kα
Output x-ray power: 43.7 W
Diameter of x-ray beam: 200 µm
Electron emission angle: 45°
Ar⁺ sputtering rate: Approximately 4.6 nm/min in reduced
   SiO₂ sputtering rate

The specimens were subjected to a PVD process to form noble metal layers on the surfaces of the specimens, respectively. The specimens were attached separately to a stage placed in a processing chamber of a magnetron sputtering system, and a Au target was bonded to an electrode placed in the processing chamber. The processing chamber was evacuated to 0.00133 Pa (1×10⁻⁵ Torr). Then, Ar gas was supplied into the processing chamber so that the pressure in the processing chamber is 0.266 Pa (2×10⁻³ Torr). Radio frequency power (RF power) was applied to the electrode provided with the Au target to generate an Ar plasma by exciting the Ar gas. The Ar plasma causes the Au target to sputter. Thus a Au film of 10 nm in thickness was deposited on one of the surfaces of each specimen. Then, the specimens were turned over and a Au film of 10 nm in thickness was deposited on the other surface of each specimen. The specimens having surfaces coated respectively with the noble metal films were subjected to a heat treatment at 400°C for 2 min in the atmosphere to form conductive layers.

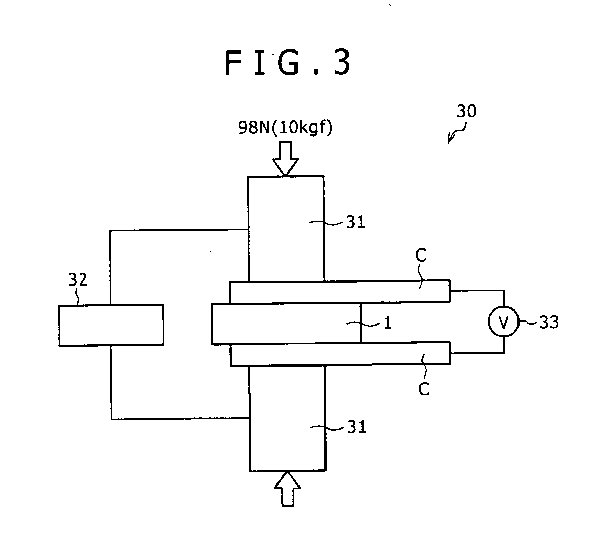

Respective contact resistances under a load of 98 N (10 kgf) of the specimens were measured by a contact resistance measuring device 30 shown in Fig. 3. Fig. 3 is a typical view of assistance in explaining a contact resistance measuring method.
Each specimen was sandwiched between carbon cloth pieces. Copper electrodes 31 having a contact area of 1 cm² were pressed against the carbon cloth pieces C by a pressure of 98 N. then, a dc current of 7.4 mA was passed through the copper electrodes 31 by a dc power supply 32. A voltage across the carbon cloth pieces C was measured by a voltmeter 33, and a contact resistance was calculated.
All the specimens had contact resistances in the range of 4 to 6 mΩ·cm² and were satisfactory in conductivity.

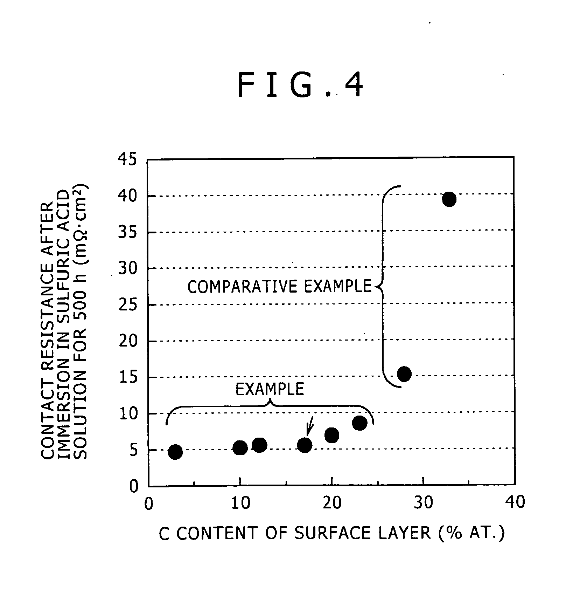

Then, the specimens were immersed in a sulfuric acid solution of pH 2 heated at 80°C for 500 h. Then, the respective contact resistances of the specimens were measured by the same method mentioned above. The dependence of the contact resistance of each specimen measured after immersion in the sulfuric acid solution for 500 h on the C content of the surface layer of specimen is shown in Fig. 4. In Fig. 4, C content (% at.) is measured on the horizontal axis, and contact resistance (mΩ·cm²) measured after immersion in the sulfuric acid solution for 500 h is measured on the vertical axis.

It was found that the contact resistance increased sharply after immersion in the sulfuric acid for 500 has shown in Fig. 4 when the maximum C content was above 25% at. That is, it was found that, when the surface layers of the specimen contained carbon having binding energy in the range of 280 to 284 eV as measured by x-ray photoelectron spectroscopy in a maximum C content above 25% at., the specimen could not maintain a low contact resistance for a long time when the specimen was used in a high-temperature acid atmosphere, and different specimens would have different effects on maintaining a low contact resistance for a long time, respectively.

It was found that contact resistance did not increase when the maximum C content of the surface layer of the specimen was 25% at. or below. That is, it was found that a low contact resistance could be maintained for a long time even if the specimen was used continuously in a high-temperature acid atmosphere and when the surface layers of the specimen contained carbon having binding energy in the range of 280 to 284 eV in a C content of 25% at. or below.

Test 2 The specimens having surface layers having a maximum C content of 17% at., namely, the specimens having a contact resistance and a maximum C content indicated by the arrow in Fig. 4, among the specimens of the eight samples of titanium sheets used for Test 1 were used. Some of the specimens were coated with a Pt film of 20 nm in thickness and the rest were coated with a Pd film of 20 nm in thickness by the same method used for forming the Au films for Test 1. The specimens coated with the Pt film were subjected to heat treatment at 400°C for 5 min in the atmosphere. The specimens coated with the Pd film were subjected to heat treatment at 400°C for 5 min in an atmosphere of 0.0065 Pa (5×10⁻⁵ Torr) in a furnace for vacuum heat treatment.

The respective contact resistances of the specimen coated with the Pt film and thus heat-treated and the specimens coated with the Pd film and thus heat-treated were measured by the same method mentioned above in connection with Test 1.
The specimen coated with the Pt film and thus heat-treated and the specimens coated with the Pd film and thus heat-treated had contact resistances of 4.5 mΩ·cm² and 5.2 mΩ·cm², respectively.

The specimens were immersed in a sulfuric acid solution of pH 2 heated at 80°C for 500 h. Then, the respective contact resistances of the specimens were measured by the same method mentioned above in connection with Test 1.
The specimen coated with the Pt film and heat-treated and the specimens coated with the Pd film and heat-treated had contact resistances of 4.8 mΩ·cm² and 5. 0 mΩ·cm², respectively; that is, the respective contact resistances of the specimens coated with the Pt film and those coated with the Pd film after immersion in the sulfuric acid solution of pH 2 heated at 80°C for 500 h were approximately equal to those of the specimens before immersion in the sulfuric acid solution of pH 2 heated at 80°C for 500 h, respectively. The measurements proved that the specimens could maintain a low contact resistance.

## Claims

1. Use of a titanium substrate for forming a separator for a fuel cell, made of titanium or a titanium alloy and having surface layers containing carbon having binding energy in the range of 280 to 284 eV as measured by x-ray photoelectron spectroscopy in a maximum carbon content of 25% at. or below.

2. The use according to claim 1, wherein the titanium substrate is made of pure material and has a thickness in the range of 0.05 to 0.3 mm.

3. A method of manufacturing a separator for a fuel cell, said method comprising the steps of:
forming a noble metal film containing at least one of Ru, Rh, Pd, Os, Ir, Pt and Au on the surface of the titanium substrate according to the claim 1; and
subjecting the titanium substrate coated with the noble film to a heat treatment at a temperature between 300 °C and 800 °C.

## Patentansprüche

1. Verwendung eines Titansubstrats zum Bilden eines Separators für eine Brennstoffzelle, hergestellt aus Titan oder einer Titanlegierung und mit Oberflächenschichten, enthaltend Kohlenstoff mit einer Bindungsenergie in dem Bereich von 280 bis 284 eV, gemessen durch Röntgenstrahl-Photoelektronenspektroskopie, in einem maximalen Kohlenstoffgehalt von 25 Atom-% oder darunter.

2. Verwendung gemäß Anspruch 1, wobei das Titansubstrat aus einem Reinmaterial hergestellt ist und eine Dicke in dem Bereich von 0,05 bis 0,3 mm aufweist.

3. Verfahren zur Herstellung eines Separators für eine Brennstoffzelle, wobei das Verfahren die Schritte umfaßt:
das Bilden eines Edelmetallfilms, enthaltend mindestens eines von Ru, Rh, Pd, Os, Ir, Pt und Au, auf der Oberfläche des Titansubstrats gemäß Anspruch 1, und
das Unterwerfen des Titansubstrats, beschichtet mit dem Edelmetallfilm, einer Wärmebehandlung bei einer Temperatur zwischen 300°C und 800°C.

## Revendications

1. Utilisation d'un substrat de titane permettant de former un séparateur pour une pile à combustible, constitué de titane ou d'un alliage de titane et ayant des couches de surface contenant du carbone présentant une énergie de liaison dans la plage de 280 à 284 eV, telle que mesurée par spectroscopie photoélectronique des rayons X à une teneur en carbone maximale de 25 % at. ou moins.

2. Utilisation selon la revendication 1, dans laquelle le substrat de titane est constitué de matériau pur et présente une épaisseur dans la plage de 0,05 à 0,3 mm.

3. Procédé de fabrication d'un séparateur pour une pile à combustible, ledit procédé comprenant les étapes consistant à :
former un film de métal noble contenant au moins un élément parmi Ru, Rh, Pd, Os, Ir, Pt et Au sur la surface du substrat de titane selon la revendication 1 ; et
soumettre le substrat de titane revêtu avec le film noble à un traitement par la chaleur à une température comprise entre 300°C et 800°C.
